# EUROPEAN PATENT SPECIFICATION

(11) **EP 0 677 666 B1**
(45) Date of publication and mention of the grant of the patent: **04.03.1998**
(21) Application number: 95302318.1
(22) Date of filing: 07.04.1995
(51) Int. Cl.: F16B 19/10

(54) **Blind rivet**
Blindniete
Rivet aveugle

(30) Priority: 14.04.1994 GB 9407415
(43) Date of publication of application: 18.10.1995
(73) Proprietor: AVDEL TEXTRON LIMITED, Welwyn Garden City, Hertfordshire AL7 1EZ (GB)
(72) Inventor: Browne, Laurence Anthony, Luton, Bedfordshire (GB)
(74) Representative: Treacher, Alan Leslie

(56) References cited:
- DE-A- 2 625 023
- US-A- 2 501 567

## Description

This invention relates to a blind rivet and more particularly, although not exclusively, to a self-plugging blind rivet of the breakstem kind.

Self-plugging blind rivets are well-known, and generally comprise an elongate, generally cylindrical, stem having a radially enlarged head at one of its ends, and a tubular shell having a shank, and a radially enlarged shell head at one of the shank for engaging one face of a workpiece, the stem extending through an axial bore in the shell and projecting from the head end of the shell, and the head of the stem abutting an end face of the shank at or adjacent the other end (the "tail end") of the shank which is remote from the shell head. On pulling the projecting stem and supporting the head of the shell in order to set the rivet, a portion of the shank between the shell head and the head of the stem may be caused to collapse axially to form an annular bulge, or fold, which projects radially outwardly of the shank, and constitutes a "blind head". The blind head may be forced into engagement with the opposite, or "blind" face of the workpiece, and thus the members of the workpiece may be fastened tightly together between the shell head and the blind head formed by pulling the stem.

Usually, although not necessarily, the stem is provided with a breakneck at which it will break, when setting of the rivet is complete, leaving a part of the stem, including the stem head, plugging the bore of the shell, while another part of the stem, known as the stem-tail, is removed from the set rivet and discarded.

In order that a blind rivet may be satisfactory, it must usually meet a number of requirements, and it is not always easy or even possible to design a rivet which will meet all the requirements imposed since the introduction of a feature to achieve one objective may preclude the achievement of another objective.

It is usually required that a blind rivet should provide a strong and secure fastening, that identical rivets of a given size should be capable of securely fastening workpieces having a fairly wide range of total thickness, which is to say, it should have a wide "grip range".

It is usually desirable that the blind head should be able to engage a substantial area of the surface of the workpiece.

Furthermore, in the case of a self-plugging blind rivet, it is very desirable that the plug part of the stem be retained securely in the shell of the set rivet in order that is should not become separated to form unwanted debris.

The designing of a rivet involves consideration of both the details of the shape and the physical characteristics of the materials used. Many designs employ a variation in the external diameter of the shank of the rivet shell along its length, in order to influence the behaviour of the material during the setting of the rivet, and in some this is achieved by crimping the shell onto the stem by, for example, the use of radially inwardly moving dies, in order to produce a local reduction in the external diameter.

Instead of crimping the shell shank in order to produce a reduction in the external diameter, the shank may be rolled since, as is well understood, the effects of rolling, and crimping, are, for the purposes of the invention, substantially the same as each other. The terms "crimping" and "crimped" as used herein are therefore to be understood to apply equally to rolling, and rolled respectively, unless the context requires otherwise.

In addition to reducing the external diameter, the crimping (or rolling) operation may be used to produce work-hardening of the material in the crimped region, and also to force the shell into intimate engagement with the stem so that the rivet can be handled and remain ready for use without risk of its parts being inadvertently separated.

Depending on the particular effect which it is desired to achieve, crimping is applied variously to different parts of the shank of the shell. Thus, there may be a single crimped zone, or two or more crimped zones spaced apart from each other.

Provided the wall thickness of the shank is not unduly reduced in the crimped zone or zones, the effect of both hardening and reducing the external diameter is to increase the resistance to collapse of the crimped zone or zones under axial load when the rivet is set, so that collapse of the shank to form a bulge or fold tends to occur in the uncrimped parts of the shank.

GB 1 029 654 discloses a blind rivet in which the shell shank is crimped at a position intermediate between and spaced from both the preformed head and the tail end of the shell. DE 2 625 023 discloses two embodiments of a rivet, the first of which has two crimped zones spaced apart from each other, one of the zones being adjacent to the tail end of the shank, and the other zone being spaced from both the shell head and the first mentioned zone, and the other embodiment has a single crimped zone at the tail end of the shank.

In each of the known rivets referred to above, the transition between the crimped and the uncrimped zones of the shell shank is quite abrupt, taking place in a region in which the external surface of the shank slopes at an angle of about 45° to the axis of the shell.

Such known rivets have been found to have disadvantages, particularly when the shell is formed of material such as low carbon steel which, although strong, is of relatively poor ductility compared with, for example, aluminium.

Thus, in use of the rivet disclosed in Figures 7, 10 and 12 of GB 1 029 654 the stem head enters partway into the uncrimped tail end part of the shell forming a blind head and, if the workpiece is too thin to be gripped between the blind head and the preformed head, the remainder of the uncrimped tail end part then collapses in concertina fashion to engage the rear face of the workpiece.

In the rivets disclosed in DE 2 625 023, due to the crimping of the tail end portion of the shell shank, the tail end portion is hardened and therefore more resistant to deformation by the stem head. Consequently, the stem head does not enter the tail end portion of the shank, and the tail end portion does not deform into a bulge. Instead, the uncrimped portion spaced from the tail end by the crimped tail end portion deforms either into a single bulb to engage a thick workpiece, or, if the workpiece is thin, into a first bulb, which fails to engage the workpiece, and then into a second, less well defined, bulb which does engage the workpiece.

Particular disadvantages which have been found in the known rivets are that, due to the abrupt transition between the crimped and the uncrimped zones, there is a tendency for the material of the shell to develop cracks at the fold which develops at the transition region during setting of the rivet, and the known rivets have a rather limited grip range.

In this connection it is to be noted that the grip range is greatly influenced by the length of the uncrimped zone which is able to project beyond the rear face of the workpiece, since it is this uncrimped zone which becomes bulbed to form the one or more bulbs which are relied upon to engage the workpiece.

However, it is not always possible to extend the grip range of a rivet merely by making the shell with an uncrimped zone of greater length, because it is found that the longer the uncrimped zone, the less stable it is, in the sense that the number, position, and form of the bulb or bulbs becomes unpredictable. Thus, there may be formed two or more incompletely developed bulbs, or the bulb or bulbs may be at positions which make them inappropriate to secure the workpiece properly.

We have now found a way of making a rivet which is less susceptible to cracking, and which can be used over a desirably wide grip range, and yet can be relied upon to form a secure fastening for a workpiece without becoming unstable.

More particularly, we have found that a rivet can be made to operate satisfactorily over an unusually large grip range by providing two transition zones having a shallow angle of slope.

Advantageously, the zones of reduced external diameter can be formed by crimping a cylindrical shank, to produce work hardening in the crimped zones.

According to the present invention, there is provided a blind rivet comprising:-
a tubular shell having a generally cylindrical shank and a radially enlarged preformed shell head at one end of the shank, and a bore which extends axially throughout the head and the shank;
and an elongated stem which extends through the bore of the shell, the stem comprising a stem-tail which protrudes from the head end of the shell, a plug portion which is disposed within the shell bore, and a radially enlarged head for abutting a tail end face of the shell shank;
the shell shank having two zones of reduced external diameter, spaced apart from each other by an intermediate zone having an external diameter greater than that of each of the zones of reduced diameter, one of said zones being at or adjacent to the tail end of the shell;
the intermediate zone comprising two transition zones each of which has a profile in the longitudinal direction of the shell such that the external diameter of the shank increases progressively from the diameter of a respective one of the zones of reduced diameter to a maximum in the intermediate zone,
and wherein the mean rate of the progressive increase in diameter in each transition zone corresponds to that of a transition zone having a linear external profile which, in the longitudinal direction of the shell, forms angle of from 2° to 12° with the axis of the shell bore.

Embodiments of the invention will now be described, by way of example, with reference to the accompanying drawings, in which:-
Figure 1 illustrates a self-plugging blind rivet according to the invention, the shell being shown in axial longitudinal section and the stem in elevation; and
Figures 2, and 3 are elevations, partly in section, showing, respectively, early and final stages in the installation of the rivet of Figure 1 in a workpiece of the maximum thickness for which the rivet is suited, and
Figure 4 is a view similar to Figure 1, showing another embodiment of the invention in which the shell partly encloses the head of the stem.

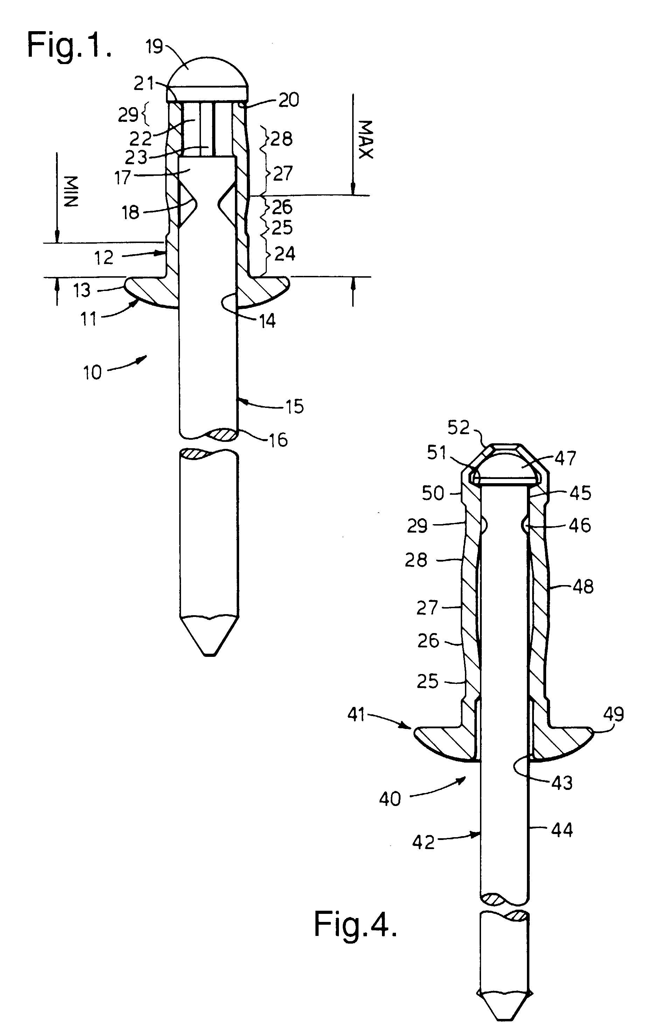

Referring first to Figure 1 of the drawings, a blind rivet 10 comprises a tubular shell 11 having a generally cylindrical elongate shank 12 and a radially enlarged preformed shell head 13 at one end of the shank. The other end of the shank is known as the "tail-end". A bore 14 extends axially through the shank and head of the shell. The rivet also comprises an elongate stem 15 which extends completely through the bore 14. The stem comprises a stem-tail 16 (shown part broken-away in Figure 1 for ease of illustration) the majority of the length of which projects from the head end of the bore 14, a plug portion 17 joined to the stem-tail by means of a breakneck 18, and a radially enlarged stem head 19 beyond the tail end of the shell.

The stem head 19 has an annular underface 20 which, in this example, is flat (although it may be undercut, or slightly concave) and is in contact with an annular end face 21 at the tail end of the shell. The tail end face 21 is substantially flat and at right angles to the axis of the shell. The plug portion has a part 22, known as the saddle, adjacent to the head 19 and of reduced cross-sectional area and approximately elliptical cross-section. In Figure 1, the minor diameter of the saddle part 22 is shown, whilst its major diameter is at right angles to its minor diameter and has one end shown at 23.

It will be seen from Figure 1 that the exterior longitudinal surface of the shell-shank 12 is shaped to have a profile which comprises successively in the direction from head 13 to tail 21, a cylindrical zone 24 of full diameter which represents the nominal diameter of the rivet, a first zone 25 of reduced diameter, a first transition zone 26, a spacing zone 27 of full diameter, a second transition zone 28, and a second zone 29 of reduced diameter. The two transition zones 26 and 28, together with the spacing zone 27 between them, constitute an intermediate zone between the two zones of reduced diameter, in which the diameter of the shank increases progressively from that of the zones of reduced diameter, through the transition zones, to a maximum equal to the nominal diameter.

It will also be seen from Figure 1 that the interior surface of the shell which forms the wall of the bore 14 is in contact with the surface of the stem everywhere along its length, except at the breakneck 18, and, in particular, with the surface of the saddle part 22 of reduced cross-sectional area. This contact, and the profiled shape of the exterior of the shell, is achieved by deforming the shell inwardly, after the stem has been inserted into the shell, by means of a crimping operation (i.e using radially inwardly moving dies) or a rolling operation.

In this embodiment, the two transition zones 26, 28 each have a linear profile in which the exterior surface forms a very shallow angle of slope, of about 7°, with the axis of the shell. Due to the shallowness of the angle of slope, the progressive increase in diameter which occurs in each of the transition zones occurs over a significant proportion of the length of the shank. Furthermore, as the two transition zones are spaced apart by the length of the spacing zone 27, the overall length of the intermediate zone is substantial, and in this embodiment represents approximately half of the total length of the shank, and also corresponds roughly to the nominal diameter of the rivet.

When, in use of the rivet, the shank is subjected to axial compression by pulling the stem while supporting the shell head, it is primarily the intermediate zone, rather than the zones of reduced diameter adjacent to it, which absorbs the applied force and collapses to form a blind head.

This is believed to be due mainly to the profiled shape of the shank. More particularly, it is believed that the reduced diameter of the zones 25 and 29 relative to the greater diameters of the intermediate zone and the cylindrical zone 23, renders the zones 25 and 29 more resistant to distortion, so that they have less tendency to buckle or bulb outwardly than the intermediate zone.

However, since in practice we prefer to form the reduced diameter zones by crimping, so that they are also work hardened, we recognise that the increased hardness also contributes to their resistance to deformation.

Nevertheless, it is believed that one of the most significant features of a rivet of this invention is that of the two transition zones in each of which the diameter increases to a maximum between the two zones of reduced diameter. Thus, by virtue of the two transition zones, the exterior shape of the intermediate zone is initially made similar to that of a bulge or blind head in the early stages of its formation, and this results in the fact that an axially compressive applied force will have a component radially outwardly of the shank which will result in bulbing occurring in the intermediate zone.

In the absence of external constraints, the bulbing will occur in the spacing zone 27 substantially midway between the two transition zones, but in order that the rivet can accommodate a range of different thicknesses of workpiece, the region of the shank which becomes involved in the formation of the blind head is able to vary according to the thickness of the work. Thus, when fastening a workpiece of the maximum thickness for which the rivet is suited, the blind head is formed substantially entirely from material of the intermediate zone, but in workpieces progressively of lesser thickness than the maximum, progressively more of the material of the shank nearer the shell head becomes involved in forming the blind head. Thus, the zone 25 of reduced diameter becomes involved progressively more as the thickness of the work is decreased, so that although bulbing occurs initially in the intermediate zone and forms a blind head which is unable to engage a workpiece substantially thinner than the maximum for which the rivet is suited, with continued pulling of the stem, the blind head enlarges, involving progressively more of the shank including the zone 25 until eventually the blind head engages the rear face of the workpiece and forces its members tightly together, whereupon the force required to produce further deformation of the shell and compression of the workpiece exceeds that which can be transmitted by the breakneck 18, and the stem then breaks at the breakneck, bringing the installation operation to an end. In this connection, it is to be noted that the cylindrical spacing zone has two main purposes. First, is that it contributes to the overall length of the intermediate zone, and thereby enables the formation of a blind head of greater diameter than could be achieved in the absence of the spacing zone, particularly when the rivet is used to fasten work of or approaching the maximum thickness for which the rivet is suited. Second, the spacing zone serves to increase the distance between the shell head 13 and the transition zone 28 which is further from the head 13, and thereby increases the maximum thickness of work which can be accommodated without altering the minimum thickness. Thus, it serves to increase the grip range of the rivet, that is to say to increase the difference between the minimum and maximum thickness of workpiece which can be accommodated satisfactorily. However, it would be possible to omit the spacing zone, so that the two transition zones were continuous, and bulbing would then take place generally in the region where the transition zones meet, but such a rivet would have a quite limited grip range.

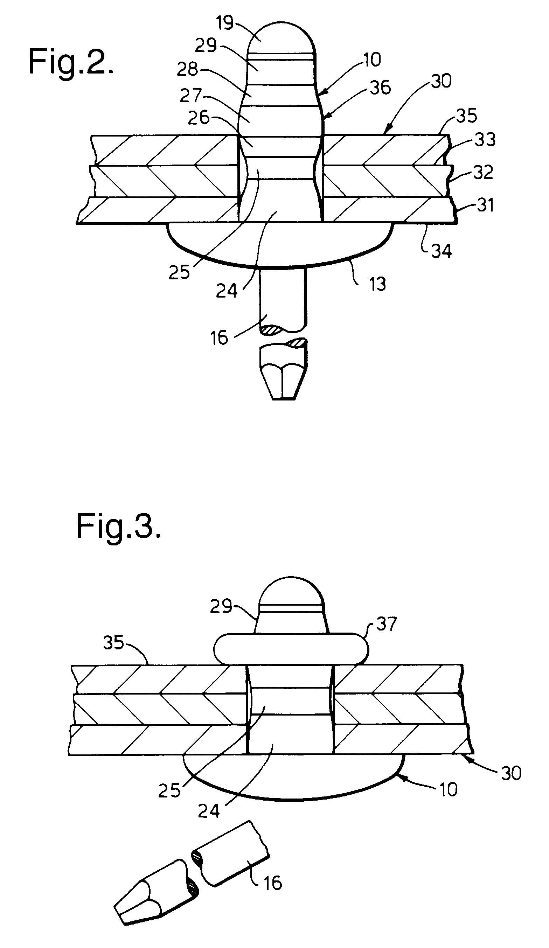

Referring now to Figure 2, the rivet 10 is shown having been inserted into a workpiece 30. The workpiece 30 comprises three members in the form of apertured sheets 31, 32 and 33 which are to be fastened together. The apertures of the sheets are aligned, and the shell head 13 abuts a face 34 of the nearer sheet 31 on one side of the workpiece, while the shank 12 of the shell extends through the aligned apertures and projects beyond the other or farther side 35 of the workpiece which is also referred to as the "blind face" of the sheet 33.

The workpiece 30 is of the maximum thickness for which the rivet 10 is suited, and, as can be seen in Figure 2, the blind face 35 is approximately aligned with the part of the shank at which the first transition zone 26 meets the spacing zone 27. Thus, substantially the whole of the spacing zone and the second transition zone 28 project beyqnd the blind face 35.

As previously indicated, Figure 2 shows an early stage in the installation of the rivet 10 in which the shank has begun to deform.

At this stage, the zone 24 adjacent to the head 13 has shortened and has increased in diameter, so that it begins to fill the apertures in the sheets 31 and 32, and a bulb 36 has begun to form symmetrically between the ends of the intermediate zone, resulting in an increase in diameter substantially centred in the spacing zone 27. The bulb 36 is in engagement with the sheet 33 around the edge at which the aperture in the sheet meets the blind face 35.

Both of the reduced diameter zones 25 and 29 have substantially resisted deformation.

Figure 3 shows the rivet 10 fully installed, and it will be seen that the bulb has become further radially enlarged and axially shortened, and that it has been forced into engagement with a substantial area of the blind face 35 peripherally of the aperture in the workpiece. The zone 25 has now expanded radially, so that the apertures are now substantially filled, and the zone 29 has also undergone some radial expansion and axial shortening.

However, the material of the two zones 25 and 29, originally of reduced diameter, remains distinguishable from the bulb of material which has been formed entirely by deformation of of material from the intermediate zone.

In the fully installed rivet, the bulbed material, now fully formed and disc-like, constitutes a blind head 37.

As previously indicated, the rivet 10 is also able to fasten members of a workpiece thinner than the maximum. Thus, still referring to Figure 3, if for example the sheet 33 is omitted, so that the farther face of the sheet 32 is the blind face of the workpiece, and is aligned with that part of the shank at which the first zone 24 of full diameter meets the first zone 25 of reduced diameter, progressively more of the shank between the intermediate zone and the shell head 13 becomes involved in the formation of a bulb and, ultimately in the formation of a blind head. Thus, initially, a bulb is formed in the intermediate zone in exactly the same way as shown in Figure 2. However, as the workpiece is thinner, the bulb is not constrained by engagement with the workpiece at such an early stage as that shown in Figure 2. Consequently, with continued application of force, the bulb continues to increase in size at the expense of parts of the shank nearer the shell head. More particularly, as the bulb increases in size, it progressively involves all of the first transitional zone 26 and then involves the material of the first zone 25 of reduced diameter, rather than that of the reduced zone 29 which is in engagement with the stem head 19.

Thus, the bulb, and ultimately the blind head, tends to grow and to advance towards the shell head 13 until eventually it is forced firmly into engagement with the blind face of the thinner workpiece.

The rivet of the invention forms only a single bulb, and from this a single blind head which engages the workpiece, whether the workpiece is thick or thin. This is because the two transition zones, as well as the two zones 25 and 29 of reduced diameter, tend to resist bulbing. Consequently, bulbing necessarily takes place in the region between the two transition zones, such as the spacing zone 27 if this is present, and only to the extent necessary to grip the workpiece does material of the shank nearer to the shell head become involved or consumed in forming the blind head.

In the rivet 10, the shell 11 fits closely to the stem 15 throughout the length of the bore 14, and the bore is of substantially constant diameter except where it enters into the saddle part 22 in which the diameter is partly reduced. However, this is not essential.

In another embodiment of the invention, the body is shaped differently, primarily in order to substantially enclose the stem head and thereby prevent loss of the plug. In particular, this has led to a design of rivet in which the bore varies in diameter along its length, but which nevertheless still embodies the invention.

Thus, referring now to Figure 4 of the drawings, a rivet 40, embodying the invention, comprises a tubular rivet shell 41, and a stem 42 which is disposed in a bore 43 of the shell.

The stem 42 is generally similar to that of the rivet 10 having a stem tail 44, a plug portion 45 joined to the stem tail by a breakneck 46, and a radially englarged stem head 47. In this embodiment, the plug portion 45 lacks a saddle part and has a constant diameter throughout its length equal to the diameter of the stem-tail.

The shell 41 has a shell shank 48 and a head 49 at one end of the shank. The longitudinal profile of the exterior of the shank is similar to that of the rivet 10 except that, at the end remote from the shell head, the shank is radially enlarged to provide a tail-end portion 50 in which the stem head 47 is substantially enclosed.

Thus, the shank has a zone of full diameter equal to the nominal diameter of the rivet adjacent to the shell head, and two zones of reduced diameter, which can be formed conveniently by crimping or rolling parts of full diameter, as in the previous embodiment, and, between the reduced diameter zones, an intermediate zone in which the diameter increases progressively to the full diameter through two transition zones, each of which forms an angle of 6° with the axis of the shell.

The tail end portion 50 has an external diameter equal to the full, or nominal diameter, and internally it presents an annular tail-end face 51 against which the stem head 47 abuts. A peripheral part 52 of the tail end portion extends beyond the end-face 51 in the direction away from the shell head, and converges beyond the stem head so as to substantially enclose it, in the manner of an involucre.

As can be seen in Figure 4, the diameter of the stem head is necessarily smaller than the full diameter of the shank, and the diameter of the bore of the shell varies along the length of the shell in such a way that the stem is engaged by the shell only in the region of the plug adjacent to the stem head, and at a position near the shell head at which both the external and internal diameters of the shell shank are reduced, as, for example, by crimping the shank on to the stem-tail.

Thus there is clearance between the shell and the stem in the general region of the shell head and in the region corresponding to the intermediate zone of the shank.

This is believed to be advantageous in that it provides the intermediate zone with an internal profile corresponding generally to its external profile, and thus the intermediate zone is provided with an incipient bulge which facilitates the development of a blind head during installation.

Although, in the embodiments of Figures 1 and 4, the profiles of the two transition zones 26, 28 are linear, providing a linearly progressive increase in diameter from the zones of reduced diameter towards a maximum in the intermediate zone, the progressive increase in diameter need not necessarily be linear. Thus, for example, either or both of the transition zones could have a curved exterior profile, and such a profile could be concavely curved although we prefer that the curved profile be convex. We prefer that the transition zones blend gradually into the zones of reduced diameter or through a small angle, as in the preferred embodiments.

If the transition zone or zones should have a convexly curved profile then the tangent to the curve at the point at which the transition zone meets the adjacent zone of reduced diameter should form an angle not greater than 12° and preferably within the range 4° to 10° with the axis of the shell bore.

As another alternative, the transition zones could be stepped, so that the increase in diameter occurs stepwise.

In any case, if the increase in diameter is achieved through a curved or stepped profile, the mean rate of the increase should correspond to that of a linear profile which forms an angle of from 2° to 12° with the axis of the bore.

## Claims

1. A blind rivet (10) comprising:-
a tubular shell (11) having a generally cylindrical shank (12) and a radially enlarged preformed shell head (13) at one end of the shank (12), and a bore (14) which extends axially throughout the head (13) and the shank (12);
and an elongated stem (15) which extends through the bore (14) of the shell (11), the stem (15) comprising a stem-tail (16) which protrudes from the head end of the shell (11), a plug portion (17) which is disposed within the shell bore (14), and a radially enlarged head (19) for abutting a tail end face (21) of the shell shank (12);
the shell shank (12) having two zones (25,29) of reduced external diameter spaced apart from each other by an intermediate zone (26,27,28) having an external diameter greater than that of each of the zones (25,29) of reduced diameter, one of said zones (25,29) of reduced diameter being at or adjacent to the tail end of the shell (11);
the intermediate zone (26,27,28) comprising two transition zones (26,28) each of which has a profile in the longitudinal direction of the shell (11) such that the external diameter of the shank (12) increases progressively from the diameter of a respective one of the zones (25,29) of reduced diameter to a maximum in the intermediate zone, and characterised in that the mean rate of the progressive increase in diameter in each transition zone (26,28) corresponds to that of a transition zone having a linear external profile which, in the longitudinal direction of the shell (11), forms an angle of from 2° to 12° with the axis of the shell bore (14).

2. A blind rivet as claimed in claim 1, characterised in that at least one of the transition zones (26,28) blends smoothly into the respectively adjacent zone(25 or 29) of reduced external diameter.

3. A blind rivet as claimed in either of claims 1 or 2, characterised in that the two transition zones (26,28)are spaced apart by a spacing zone (27).

4. A blind rivet as claimed in claim 3, characterised in that the spacing zone (27) is substantially cylindrical.

5. A blind rivet as claimed in claim 4, characterised in that the spacing zone (27) has a diameter equal to the maximum diameter of the two transition zones (26,28).

6. A blind rivet as claimed in any preceding claim, characterised in that the said angle is from 4° to 10°.

7. A blind rivet as claimed in any preceding claim, characterised in that the external longitudinal profile of the shell (11) between the two reduced zones (25,29) is symmetrical.

## Patentansprüche

1. Blindniet (10) mit folgenden Bestandteilen:
eine rohrförmige Hülse (11) mit einem im wesentlichen zylindrischen Schaft (12) und einem radial vergrößerten vorgeformten Hülsenkopf (13) an einem Ende des Schaftes (12) und einer Bohrung (14) welche sich axial durch den Kopf (13) des Schaftes (12) erstreckt;
und einen langgestreckten Dorn (15) welcher sich durch die Bohrung der Hülse erstreckt, wobei der Dorn (15) einen Dornschwanz (16) aufweist, der von dem Kopfende der Hülse (11) vorsteht, einen Stopfenteil (17) der in der Hülsenbohrung (14) angeordnet ist und einen radial vergrößerten Kopf (19) zur Anlage an der Schwanzendfläche (21) des Hülsenschaftes (12);
der Hülsenschaft (12) weist zwei Zonen (25, 29) verringerten Außendurchmessers auf, die im Abstand zueinander durch eine Zwischenzone (26, 27, 28) gehalten sind, welche einen Außendurchmesser aufweist, der größer ist als der jeder der Zonen (25, 29) verringerten Durchmessers, wobei eine der Zonen (25, 29) verringerten Durchmessers an oder nahe dem Schwanzende der Hülse (11) angeordnet ist;
die Zwischenzone (26, 27, 28) weist zwei Übergangszonen (26, 28) auf, von denen jede ein Profil in Längsrichtung der Hülse (11) aufweist, welches derart ist, daß der Außendurchmesser des Schaftes (12) fortschreitend von dem Durchmesser einer der Zonen (25, 29) verringerten Durchmessers zu einem Maximum in der Zwischenzone ansteigt, **dadurch gekennzeichnet,** daß die mittlere Größe der fortschreitenden Durchmesserzunahme in jeder Übergangszone (26, 28) der einer Übergangszone entspricht, die in ein lineares Außenprofil aufweist, welches in Längsrichtung der Hülse (11) einen Winkel von 2° bis 12° zur Achse der Hülsenbohrung (14) bildet.

2. Blindniet nach Anspruch 1, **dadurch gekennzeichnet,** daß mindestens eine der Übergangszonen (26, 28) weich in die entsprechende benachbarte Zone (25 oder 29) verringerten Durchmessers übergeht.

3. Blindniet nach Anspruch 1 oder 2, **dadurch gekennzeichnet,** daß die beiden Übergangszonen (26, 28) durch eine Abstandszone (27) im Abstand voneinander gehalten sind.

4. Blindniet nach Anspruch 3, **dadurch gekennzeichnet,** daß die Abstandszone (27) im wesentlichen zylindrisch ist.

5. Blindniet nach Anspruch 4, **dadurch gekennzeichnet,** daß die Abstandszone (27) einen Durchmesser aufweist, welcher gleich dem Maximaldurchmesser der beiden Übergangszonen (26, 28) ist.

6. Blindniet nach einem der vorstehenden Ansprüche, **dadurch gekennzeichnet,** daß der Winkel zwischen 4° und 10° beträgt.

7. Blindniet nach einem der vorstehenden Ansprüche, **dadurch gekennzeichnet,** daß das äußere Längsprofil der Hülse (11) zwischen den beiden verringerten Zonen (25, 29) symmetrisch ist.

## Revendications

1. Rivet aveugle (10), comprenant :
une enveloppe tubulaire (11) ayant une tige généralement cylindrique (12) et une tête d'enveloppe préformée radialement élargie (13) à une extrémité de la tige (12), et un alésage (14) qui s'étend axialement à travers la tête (13) et la tige (12) ;
et un corps allongé (15) qui s'étend à travers l'alésage (14) de l'enveloppe (11), le corps (15) comprenant une queue de corps (16) qui dépasse de l'extrémité de tête de l'enveloppe (11), une partie de bouchon (17) qui est disposée au sein de l'alésage d'enveloppe (14), et une tête radialement élargie (19) destinée à buter contre une face d'extrémité de queue (21) de la tige d'enveloppe (12) ;
la tige d'enveloppe (12) comportant deux zones (25, 29) de diamètre extérieur réduit espacées l'une de l'autre par une zone intermédiaire (26, 27, 28) ayant un diamètre extérieur supérieur à celui de chacun des zones (25, 29) de diamètre réduit, l'une desdites zones (25, 29) de diamètre réduit étant à l'extrémité de queue de l'enveloppe (11) ou contiguë à celle-ci ;
la zone intermédiaire (26, 27, 28) comprenant deux zones de transition (26, 28) dont chacune a un profil dans la direction longitudinale de l'enveloppe (11) tel que le diamètre extérieur de la tige (12) augmente progressivement du diamètre de l'une respective des zones (25, 29) de diamètre réduit à une valeur maximale de la zone intermédiaire, et
caractérisé en ce que le taux moyen d'accroissement progressif du diamètre dans chaque zone de transition (26, 28) correspond à celui d'une zone de transition ayant un profil extérieur linéaire qui, dans la direction longitudinale de l'enveloppe (11), forme un angle compris entre 2° et 12° avec l'axe de l'alésage d'enveloppe (14).

2. Rivet aveugle selon la revendication 1, caractérisé en ce qu'au moins l'une des zones de transition (26, 28) se fond progressivement dans la zone respectivement contiguë (25 ou 29) de diamètre extérieur réduit.

3. Rivet aveugle selon l'une ou l'autre des revendications 1 ou 2, caractérisé en ce que les deux zones de transition (26, 28) sont espacées par une zone d'espacement (27).

4. Rivet aveugle selon la revendication 3, caractérisé en ce que la zone d'espacement (27) est sensiblement cylindrique.

5. Rivet aveugle selon la revendication 4, caractérisé en ce que la zone d'espacement (27) a un diamètre égal au diamètre maximal des deux zones de transition (26, 28).

6. Rivet aveugle selon l'une quelconque des revendications précédentes, caractérisé en ce que ledit angle est compris entre 4° et 10°.

7. Rivet aveugle selon l'une quelconque des revendications précédentes, caractérisé en ce que le profil longitudinal extérieur de l'enveloppe (11) entre les deux zones réduites (25, 29) est symétrique.
